# EUROPÄISCHE PATENTANMELDUNG

(11) **EP 0 896 891 A2**
(43) Veröffentlichungstag der Anmeldung: **17.02.1999**
(21) Anmeldenummer: 98115054.3
(22) Anmeldetag: 11.08.1998
(51) Int. Cl.: B60J 7/047, B60J 7/00

(54) **Wippvorrichtung für ein öffnungsfähiges Fahrzeugdach und Verfahren zur Montage einer solchen Vorrichtung**

(30) Priorität: 14.08.1997 DE 19735182
(71) Anmelder: WEBASTO KAROSSERIESYSTEME GmbH, D-82131 Stockdorf (DE)
(72) Erfinder: Färber, Manfred, 82407 Wielenbach (DE)
(74) Vertreter: Wiese, Gerhard

(57) **Zusammenfassung**

Die Erfindung betrifft eine Wippvorrichtung für ein öffnungsfähiges Fahrzeugdach, die mit einem Trägerelement (14), einem Wippelement (12) und einer Feder (30) versehen ist. Das Wippelement ist über eine Achse (10) mit dem Trägerelement schwenkbar verbunden. Die Feder ist so zwischen Wippelement und Trägerelement angeordnet, daß sie das Wippelement mit einer Vorspannkraft bezüglich einer Richtung der Schwenkbewegung beaufschlagt. Ferner ist die Feder so angeordnet und ausgebildet, daß sie für eine Vorspannkraft in einer Axialrichtung zwischen dem Wippelement und dem Trägerelement sorgt. Ferner steht die Achse bezüglich dem einen Element fest und ist durch eine entsprechende Achsöffnung (16) in dem anderen Element geführt. Die Erfindung befaßt sich ferner mit einem Verfahren zur Montage einer solchen Vorrichtung.

## Beschreibung

Die Erfindung betrifft eine Wippvorrichtung für ein öffnungsfähiges Fahrzeugdach, mit einem Trägerelement, einem Wippelement und einer Feder, wobei das Wippelement über eine Achse mit dem Trägerelement schwenkbar verbunden ist und die Feder so zwischen Wippelement und Trägerelement angeordnet ist, daß sie das Wippelement mit einer Vorspannkraft bezüglich einer Richtung der Schwenkbewegung beaufschlagt. Gegenstand der Erfindung ist ferner ein Verfahren zur Montage einer solchen Vorrichtung

Eine solche gattungsgemäße Vorrichtung ist aus DE 196 08 916 C1 bekannt. Dabei bildet die Wippvorrichtung jeweils einen Teil von ausschwenkbaren Befestigungselementen für ein Lamellendach. An einem in Dachlängsrichtung geführten Verstellelement des Befestigungselements, welches das Trägerelement der Wippvorrichtung bildet, ist das als Riegelwippe ausgebildete Wippelement mittels der als Schwenklager ausgebildeten Achse schwenkbar an dem Verstellelement angebracht. Das Schwenklager besteht aus einer genieteten Öse. An dem Schwenklager ist die als Spiralfeder ausgebildete Feder angebracht, um die Riegelwippe mit der Schwenkvorspannung bezüglich dem Verstellelement zu beaufschlagen. Beim Öffnen/Schließen des Lamellenverbundes werden die Befestigungslemente in Abhängigkeit von ihrer Schwenkstellung mit ihrem benachbarten Befestigungselement über eine Schwenkbewegung der entsprechenden Riegelwippe selbsttätig gekuppelt bzw. von diesem entkuppelt.

Nachteilig dabei ist, daß die axiale Sicherung des Wippelements mittels einer genieteten Öse relativ aufwendig ist, die Demontage erschwert und ferner ein axiales Spiel zwischen Wippelement und Trägerelement erlaubt.

Es ist Aufgabe der vorliegenden Erfindung, diese Nachteile auf möglichst einfache und kostengünstige Weise zu vermeiden.

Diese Aufgabe wird ausgehend von einer Wippvorrichtung mit den eingangs genannten Merkmalen dadurch gelöst, daß die Feder so angeordnet und ausgebildet ist, daß sie ferner für eine Vorspannkraft in einer Axialrichtung zwischen dem Wippelement und dem Trägerelement sorgt, und daß ferner die Achse bezüglich dem einen Element feststeht und durch eine entsprechende Achsöffnung in dem anderen Element geführt ist.

Diese erfindungsgemäße Lösung ist insofern vorteilhaft, als die Wippvorrichtung mit minimaler Teileanzahl sehr einfach aufgebaut werden kann und einfach und schnell zu montieren ist, eine einfache Demontage möglich ist, die Feder einen axialen Toleranzausgleich erlaubt und ferner eine axiale Spielfreiheit gegeben ist, was Klapperfreiheit im Betrieb gewährleistet.

In vorteilhafter Ausgestaltung der Erfindung ist vorgesehen, daß die Feder als Spiralfeder ausgebildet ist, die konzentrisch zu der Achse angeordnet ist, wobei das eine Federende bezüglich der Achse feststeht und das andere Federende bezüglich des anderen Elements feststeht. Dies stellt eine besonders einfach Ausführungsform dar.

In weiterer bevorzugter Ausgestaltung ist die Feder an dem freien Ende der Achse angeordnet und verläuft um die Achse herum, wobei das innere Federende in eine Aufnahmeöffnung in der Achse gesteckt ist und das äußere Federende als in der Federebene U-förmig nach außen gebogener Schenkel ausgebildet ist, der einen Vorsprung an dem ensprechenden Element umgreift.

Ferner ist bevorzugt vorgesehen, daß die Achse an ihrem freien Ende mit einer axial in der Umfangsfläche ausgebildeten Montagenut, die zu dem freien Ende der Achse hin zur Achsmitte hin abgeschrägt ist, versehen ist, an deren anderem Ende die Aufnahmeöffnung als radial verlaufende zylindrische Öffnung ausgebildet ist, sowie daß ferner das innere Federende im wesentlichen als radial in der Federebene verlaufendes gerades Stück ausgebildet ist.

Dies erlaubt eine besonders einfache Montage, indem die Achse durch die Öffnung gesteckt wird, die Feder so an dem freien Ende der Achse angesetzt wird, daß das innere Ende der Feder in die Montagenut greift, die Feder in axialer Richtung auf die Achse geschoben wird, bis das innere Federende in die Aufnahmeöffnung eingreift, und schließlich das äußere Ende der Feder gegen die tangentiale Federkraft über den Vorsprung bewegt wird, so daß der Schenkel den Vorsprung umgreift.

Außerdem ist vorzugsweise die Achse einstückig mit dem Wippelement ausgebildet. Dies stellt einen besonders einfachen Aufbau dar.

Im folgenden ist eine Ausführungsform der Erfindung anhand der beigefügten Zeichnungen näher erläutert. Es zeigen:
FIG. 1 eine perspektivische Ansicht einer erfindungsgemäßen Wippvorrichtung zu Beginn des Montagevorgangs, und
FIG. 2 eine Ansicht wie FIG. 1, jedoch nach Beendigung des Montagevorrgangs.

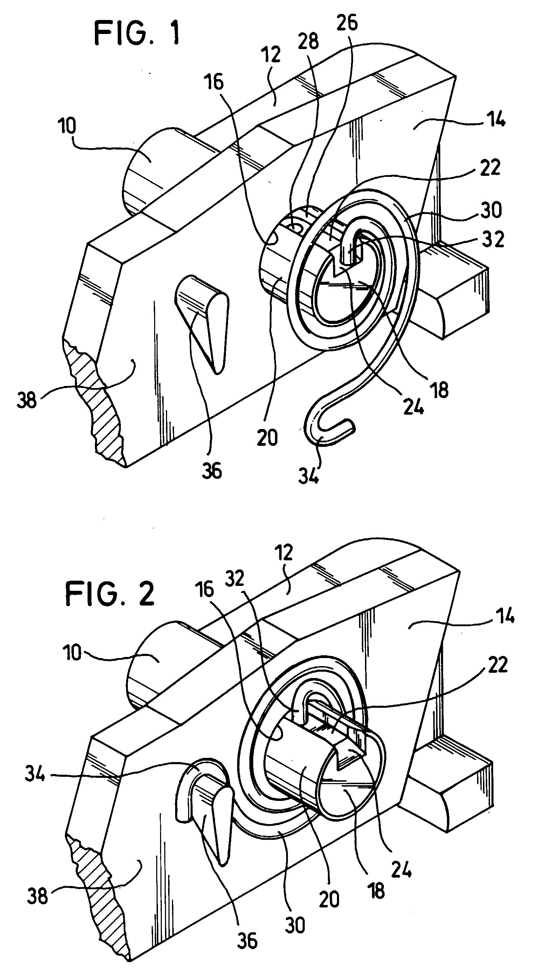

Gemäß FIG. 1 wird zu Beginn der Montage einer Wippvorrichtung eine Achse 10, die einstückig mit einem Wippelement 12 verbunden ist, das beispielsweise eine Riegelwippe für ein Befestigungselement eines Lamellendaches, wie es in DE 196 08 916 C1 beschrieben ist, darstellt, durch eine in einem Trägerelement 14 ausgebildete Achsöffnung 16 geschoben. Das Trägerelement 14 bildet in diesem Fall ein Verstellelement, wie es in DE 196 08 916 C1 beschrieben ist. Das Trägerelement 14 und das Wippelement 12 sind in FIG. 1 und 2 nur schematisch bzw. abschnittsweise dargestellt.

Die Achse 10 ist an ihrem freien Ende 18 mit einer axial in der Umfangsfläche 20 ausgebildeten Montagenut 22 versehen, die zu dem freien Ende 18 der Achse 10 hin zur Achsmitte hin abgeschrägt ist, d.h. mit einer schräg verlaufenden Fläche 24 versehen ist. An dem anderen Ende 26 der Montagenut 22 ist eine Aufnahmeöffnung 28 als radial verlaufende zylindrische Öffnung ausgebildet.

Eine Spiralfeder 30 wird mit ihrem inneren Ende 32, das im wesentlichen als radial in der Federebene verlaufendes gerades Stück ausgebildet ist, so an dem freien Ende 18 der Achse 10 angesetzt, daß das innere Ende 32 der Feder 30 in die Montagenut 22 greift und dabei auf der schrägen Fläche 24 anliegt. Die Feder 30 wird dann in axialer Richtung über die Achse 10 geschoben, bis das innere Federende 32 in die Aufnahmeöffnung 28 eingreift. Die Länge des inneren Federendes 32 ist so gewählt, daß die Federspannung das innere Federende 32 in die Aufnahmeöffnung 28 hineindrückt und darin hält. Die Feder 30 sitzt nun auf der Achse 10 bzw. läuft um diese herum.

Das äußere Federende 34 ist als in der Federebene U-förmig nach außen gebogener Schenkel ausgebildet, der zunächst dem inneren Federende 32 in etwa gegenüberliegt. Im folgenden wird der Schenkel 34 im Uhrzeigersinn gegen die tangentiale Vorspannung der Feder 30 gedreht, bis er einen an dem Trägerelement 14 ausgebildeten Vorsprung 36 umgreift. In dieser Stellung wird der Schenkel 34 durch die tangentiale Federkraft gehalten, siehe FIG. 2.

Die Aufnahmeöffnung 28 mit dem inneren Federende 32 ist so angeordnet, daß sie bei Abwesenheit von äußeren Kräften durch die axiale Federkraft einen gewissen Abstand von dem Rand der Achsöffnung 16 bzw. der Seitenfläche 38 des Trägerelements 14 entfernt liegt. Auf diese Weise beaufschlagt die Feder 30 das Wippelement 12 mit einer axialen Vorspannung bezüglich des Trägerelements 14, so daß einerseits Fertigungstoleranzen ausgeglichen werden und andererseits ein Axialspiel zwischen dem Wippelement 12 und dem Trägerelement 14 verhindert wird, was im Betrieb beispielsweise zu unerwünschten Klappergeräuschen führen kann. Durch den Eingriff des inneren Federendes 32 in die Aufnahmeöffnung 28 in der Achse 10 ist die Achse 10 gegen ein Herausrutschen aus der Achsöffnung 16 entgegen der axialen Vorspannung der Feder 30 gesichert. Ferner sorgt die Feder 30 für die für die Riegelwippenfunktion erforderliche Schwenkvorspannung des Wippelements 12 (bzw. der Riegelwippe) bezüglich des Trägerelements 14.

Da bei der Montage keinerlei irreversiblen Deformationen oder Materialverbindungen stattfinden, kann die Wippvorrichtung auch einfach wieder demontiert werden.

### Bezugszeichenliste

- 10: Achse
- 12: Wippelement
- 14: Trägerelement
- 16: Achsöffnung
- 18: freies Ende von 10
- 20: Umfangsfläche von 10
- 22: Montagenut
- 24: Schrägfläche von 22
- 26: Ende von 22
- 28: Aufnahmeöffnung in 10
- 30: Spiralfeder
- 32: inneres Ende von 30
- 34: äußeres Ende von 30
- 36: Vorsprung
- 38: Seitenfläche von 14

## Patentansprüche

1. Wippvorrichtung für ein öffnungsfähiges Fahrzeugdach, mit einem Trägerelement (14), einem Wippelement (12) und einer Feder (30), wobei das Wippelement über eine Achse (10) mit dem Trägerelement schwenkbar verbunden ist und die Feder so zwischen Wippelement und Trägerelement angeordnet ist, daß sie das Wippelement mit einer Vorspannkraft bezüglich einer Richtung der Schwenkbewegung beaufschlagt, **dadurch gekennzeichnet,** daß die Feder (30) so angeordnet und ausgebildet ist, daß sie ferner für eine Vorspannkraft in einer Axialrichtung zwischen dem Wippelement (12) und dem Trägerelement (14) sorgt, und daß ferner die Achse (10) bezüglich dem einen Element feststeht und durch eine entsprechende Achsöffnung (16) in dem anderen Element geführt ist.

2. Wippvorrichtung nach Anspruch 1, dadurch gekennzeichnet, daß die Feder (30) als Spiralfeder ausgebildet ist, die konzentrisch zu der Achse (10) angeordnet ist, wobei das eine Federende (32) bezüglich der Achse feststeht und das andere Federende (34) bezüglich des anderen Elements feststeht.

3. Wippvorrichtung nach Anspruch 2, dadurch gekennzeichnet, daß die Feder (30) an dem freien Ende (18) der Achse (10) angeordnet ist.

4. Wippvorrichtung nach Anspruch 3, dadurch gekennzeichnet, daß die Feder (30) um die Achse (10) herum verläuft.

5. Wippvorrichtung nach Anspruch 4, dadurch gekennzeichnet, daß das innere Federende (32) in eine Aufnahmeöffnung (28) in der Achse (10) gesteckt ist.

6. Wippvorrichtung nach Anspruch 5, dadurch gekennzeichnet, daß das äußere Federende (34) als in der Federebene U-förmig nach außen gebogener Schenkel ausgebildet ist, der einen Vorsprung (36) an dem ensprechenden Element (Trägerelement 14) umgreift.

7. Wippvorrichtung nach Anspruch 6, dadurch gekennzeichnet, daß die Achse (10) an ihrem freien Ende (18) mit einer axial in der Umfangsfläche (20) ausgebildeten Montagenut (22), die zu dem freien Ende (18) der Achse hin zur Achsmitte hin abgeschrägt ist, versehen ist, an deren anderem Ende (26) die Aufnahmeöffnung (28) als radial verlaufende zylindrische Öffnung ausgebildet ist, sowie daß ferner das innere Federende (32) im wesentlichen als radial in der Federebene verlaufendes gerades Stück ausgebildet ist.

8. Wippvorrichtung nach Anspruch 7, dadurch gekennzeichnet, daß die Achse (10) bezüglich des Wippelements (12) feststehend ist.

9. Wippvorrichtung nach Anspruch 8, dadurch gekennzeichnet, daß die Achse (10) einstückig mit dem Wippelement (12) ausgebildet ist.

10. Wippvorrichtung nach Anspruch 9, dadurch gekennzeichnet, daß die Aufnahmeöffnung (28) für das innere Federende (32) bei Abwesenheit von äußeren Kräften einen gewissen Abstand von dem Rand der Achsöffnung (16) entfernt liegt.

11. Verfahren zur Montage einer Wippvorrichtung gemäß Anspruch 8, dadurch gekennzeichnet, daß die Achse (10) durch die Achsöffnung (16) gesteckt wird, die Feder (30) so an dem freien Ende (18) der Achse angesetzt wird, daß das innere Ende (32) der Feder in die Montagenut (22) greift, die Feder in axialer Richtung auf die Achse geschoben wird, bis das innere Federende in die Aufnahmeöffnung (28) eingreift, und schließlich das äußere Ende (34) der Feder gegen die tangentiale Federkraft über den Vorsprung (36) bewegt wird, so daß der Schenkel den Vorsprung umgreift.
